# EUROPÄISCHE PATENTSCHRIFT

(11) **EP 1 195 723 B1**
(45) Veröffentlichungstag und Bekanntmachung des Hinweises auf die Patenterteilung: **28.07.2004**
(21) Anmeldenummer: 01120736.2
(22) Anmeldetag: 06.09.2001
(51) Int. Cl.: G07C 5/08, B60K 37/00

(54) **Verfahren zur Anzeige von Ereignissen in einem Kraftfahrzeug**
Method of displaying conditions in a motor vehicle
Procédé pour afficher des conditions dans un véhicule automobile

(30) Priorität: 21.09.2000 DE 10046907
(43) Veröffentlichungstag der Anmeldung: 10.04.2002
(73) Patentinhaber: MAN Nutzfahrzeuge Aktiengesellschaft, 80995 München (DE)
(72) Erfinder: Spaderna, Josef, Dipl.-Ing., 85229 Markt Indersdorf (DE); Eigner, Werner, 86156 Augsburg (DE); Girst, Hans-Werner, 86153 Augsburg (DE)

(56) Entgegenhaltungen:
- EP-A- 0 122 043
- US-A- 4 196 413

## Beschreibung

In den Patentansprüchen und in der Beschreibung ist das Wort "aufzeigbar" verwendet, das dem Sinne nach das Erscheinen einer Darstellung in einem Display meint.

Die Erfindung betrifft ein Verfahren nach dem Oberbegriff des Anspruches 1.

Eine Vorrichtung dieser Art ist aus der DE 41 40 864 A1 bekannt. Mit dieser Vorrichtung erfolgt eine multifunktionelle Anzeige von Diagnosesignalen in Form einer Punktmatrix, in der im Normalfall eine Zeitmesseinheit angezeigt wird. Ein elektronisches Modul nimmt eine oder mehrere Information(en) bzw. Störung(en) auf und steuert die Anzeigeeinrichtung so, dass eine entsprechende Störungsinformation anstelle der Zeitdaten sichtbar wird. Die Störungsinformationen werden durch Symbole angezeigt, wobei, abhängig von der Wertigkeit der Symbole, die Reihenfolge festgelegt ist. Mit Hilfe eines Schalters kann der Fahrer alle Symbole nacheinander sichtbar machen.

Für den Fall, dass nicht viele Symbole, z. B. fünf Symbole speicherbar sind, ist dies eine gangbare Lösung.

Aus der EP 0 872 993 A1 ist eine Anordnung zur Bedienerführung in Kommunikationsanlagen bekannt, die mit Displays für alphanumerische oder grafikfähige Anzeigen ausgestattet sind. Als Steuermittel ist ein Rollelement mit Tastfunktion und einer separaten Aktivierungstaste verwendet und wahlweise dem Display zeilenweise Aktivierungselemente zugeordnet sind.

Die genannte Anordnung ist für ein Fahrzeug nicht geeignet, weil ein Tastmittel und das Lesen von Zeilen im herkömmlichen Sinne den Fahrzeugführer zu viel ablenken würde, insbesondere bei einem Nutzfahrzeug, wie einem Lkw, bei dem es viele Bedienteile gibt.

Aufgabe der Erfindung ist es, den Fahrzeugführer, insbesondere den eines Nutzfahrzeuges wie Lkw oder Omnibus, automatisch und übersichtlich über Ereignisse (events) seines Fahrzeuges zu unterrichten bzw. zu informieren.

Die Aufgabe wird erfindungsgemäß durch die Merkmale des Anspruches 1 gelöst. Dadurch, . dass zwei erste Zeilen mit beispielsweise vier Symbolen in den Bereichen 3 und 4 aufzeigbar sind und im Hintergrund und nicht sichtbar in einer Anzeigesteuerung beispielsweise zwei weitere Zeilen mit Symbolen in Warteposition bringbar und in einem zeitlichen Abstand voneinander automatisch aufzeigbar sind, ist der Fahrzeugführer über die events des Fahrzeuges bestens informiert und kann, daraus resultierend, auf den aktuellen Fahrzeugzustand schließen.

Weiterhin ist eine dritte Zeile im Bereich 2 vorhanden, in der ein Symbol und ein Hinweis und/oder eine Handlungsempfehlung aufzeigbar ist und in einer Anzeigesteuerung hierfür eine Vielzahl von Symbolen mit je einem Hinweis und/oder einer Handlungsempfehlung gespeichert sind und automatisch, ohne Zutun des Fahrzeugführers, bei jeweils einem event aufzeigbar ist, durch die der Fahrzeugführer unmissverständlich auf ein event oder mehrere events in seinem Fahrzeug hingewiesen wird.

Das Display ist im optimalen Sichtbereich des Fahrzeugführers angeordnet, damit er problemfrei ablesen kann.

Vorteile des erfindungsgemäßen Verfahrens ist eine übersichtliche und ausführliche Information des Fahrzeugführers, ohne dass dieser durch Drücken von Knöpfen oder/und größerer Lesearbeit von seiner Pflicht für ein sorgfältiges, umsichtiges Fahren abgelenkt wird.

Zusätzlich sind die Symbole im Normalfall in schwarz auf grauem Untergrund aufgezeigt bzw. es kann vom Fahrer eine andere Farbgebung eingestellt werden, z. B. farbinvers, wenn Stand- oder Fahrlicht eingeschaltet ist, was ein ruhiges Bild vermittelt und somit den Fahrer auch nicht stört.

Weiterhin sind aus den genannten Gründen die Bereiche 3 und 4 im Wechsel von Zeilen miteinander und diese zwei Zeilen wiederum abgestimmt auf die Zeile im Bereich 2 und umgekehrt, damit ein ruhiger Gesamteindruck in der Anzeige auftritt.

Beispielsweise "warten" die Symbolzeilen im Bereich 3 und 4, wenn im Bereich 2 ein event auftritt. Der Bereich 2 hat in dem beschriebenen Beispiel eine längere Rollierzeit, weil in dieser Zeile ein Symbol und ein Hinweis / eine Handlungsempfehlung für den Fahrer gut erfassbar sein muss. Erst dann, wenn die längere Rollierzeit der Zeile im Bereich 2 abgelaufen ist, erfolgt gleichzeitig mit den Zeilen in den Bereichen 3 und/oder 4 der Zeilenwechsel.

Da eine Beschreibung der Vorgänge des erfindungsgemäßen Verfahrens vorteilhafterweise in Verbindung mit der Zeichnung durchführbar ist, wird im folgenden mit Hilfe der Zeichnung beschrieben.

Die Zeichnung zeigt schematisch und beispielhaft eine Ausführung der Erfindung.

Es zeigen:
- Fig. 1: eine Anordnung von Symbolen,
- Fig. 2: die Anordnung im Display,
- Fig. 3: die Anordnung im Armaturenbrett,
- Fig. 4: Freiplätze in den Symbolzeilen,
- Fig. 5: ein Hinzufügen von Symbolen,
- Fig. 6: ein Eintragen von Symbolen im Hintergrund,
- Fig. 7: ein Austauschen von Symbolzeilen,
- Fig. 8: Situation vor dem Austauschen einer Symbolzeile,
- Fig. 9: Situation nach dem Austauschen einer Symbolzeile,
- Fig. 10: Situation, wenn alle Zeilen belegt sind und Autorollieren gegeben ist,
- Fig. 11: Situation nach dem Autorollieren, vorherige Situation, Fig. 10,
- Fig. 12: das Einblenden von Symbolen,
- Fig. 13: eine Löschungsmarkierung,
- Fig. 14: eine Symbolzeile, in der gelöscht wurde, nach einer Rollierung,
- Fig. 15: zusammenfassbare Symbolzeilen,
- Fig. 16: eine zusammengefasste Symbolzeile,
- Fig. 17: zeitliche Abstimmung der Bereiche 3, 4 und 2,
- Fig. 18: zeitliche Abstimmung der Bereiche 3, 4 und 2.

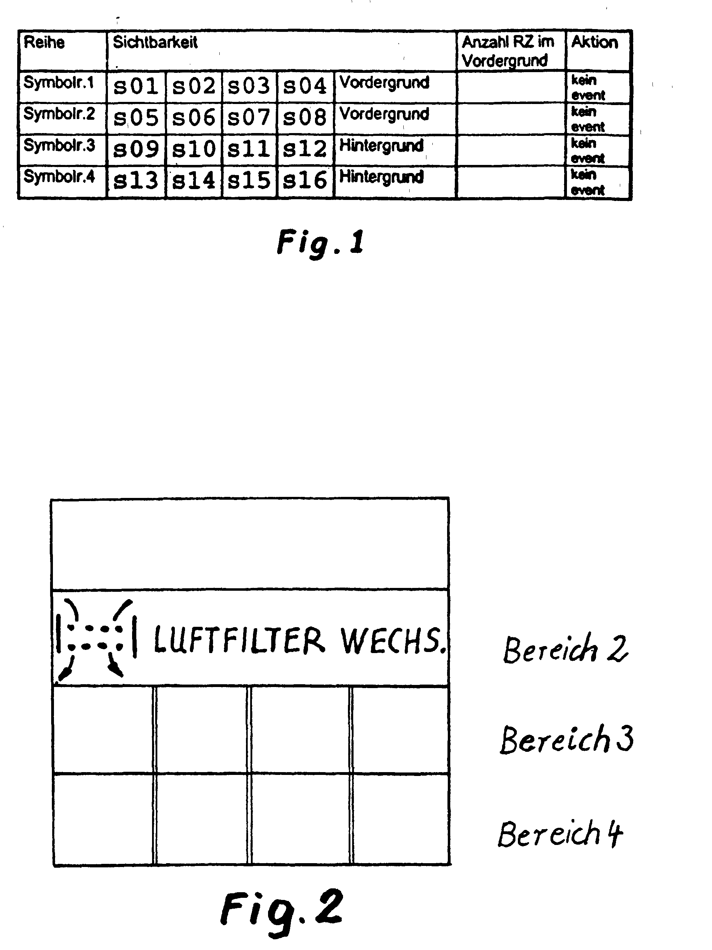

Die Fig. 1 zeigt eine Auswahl von Symbolen, die, wenn events für nahezu alle Symbole vorliegen, zeilenweise in einer Rollierzeit gezeigt werden. Die Symbolreihen oder Symbolzeilen 1 und 2 sind in dieser Fig. aufgezeigt, während die Symbolzeilen 2 und 3 im Hintergrund in der Anzeigesteuerung in Warteposition sind. Jede Symbolzeile hat hier beispielhaft vier Symbole, die, je nach event, aufzeigbar sind.

Die Symbole sind mit s01, s02 ... usw. angegeben, hinter denen in Wirklichkeit Symbole stehen. Das Wort Aktion in der Tabelle meint den Vorgang, der zum Zustand der entsprechenden Symbolzeile geführt hat.

Bedeutung der Symbolen, beispielhaft ausgewählt:: 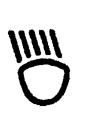 (s01) Abblendlicht eingeschaltet, 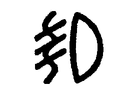 (s02) Nebelscheinwerfer eingeschaltet, 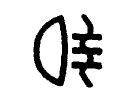 (s03) Nebelrückleuchte(n) eingeschaltet, 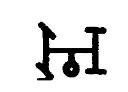 (s04) Nebenabtrieb eingeschaltet, z. B. für Mischtrommel, 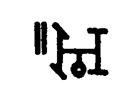 (s05) Nebenabtrieb II eingeschaltet, 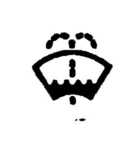 (s06) wenig Flüssigkeit in der Scheibenwaschanlage, 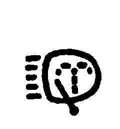 (s07) Scheinwerferreinigungsanlage in Betrieb, 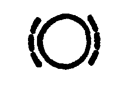 (s08) Bremsbeläge abgenützt, 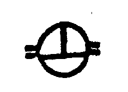 (s09) Wandlerschaltkupplung (WSK) aktiviert, 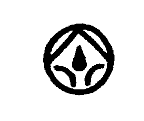 (s10) Zentralschmierung aktiviert, 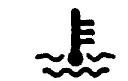 (s11) Kühlmitteltemperatur aktiviert, 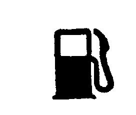 (s12) Tanken erforderlich, 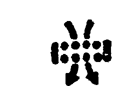 (s13) Luftfilter, zu großer Unterdruck, 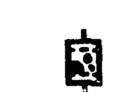 (s14) Katalysator, zu großer Gegendruck, 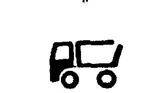 (s15) Ladebordwand nicht geschlossen.

Die bildliche Darstellung ist beispielsweise heller Untergrund und schwarzes Symbol bei nicht eingeschalteter Fahrzeugbeleuchtung und dunkler Untergrund und helles Symbol bei eingeschalteter Fahrzeugbeleuchtung. Diese Einstellung kann durch den Fahrer auch umgestellt werden.

Im Display 31 ist für die Symbole keine Umrandung und keine Zeilenangabe vorgesehen, beide Kennzeichnungen dienen in der Zeichnung einer verständlichen Beschreibung.

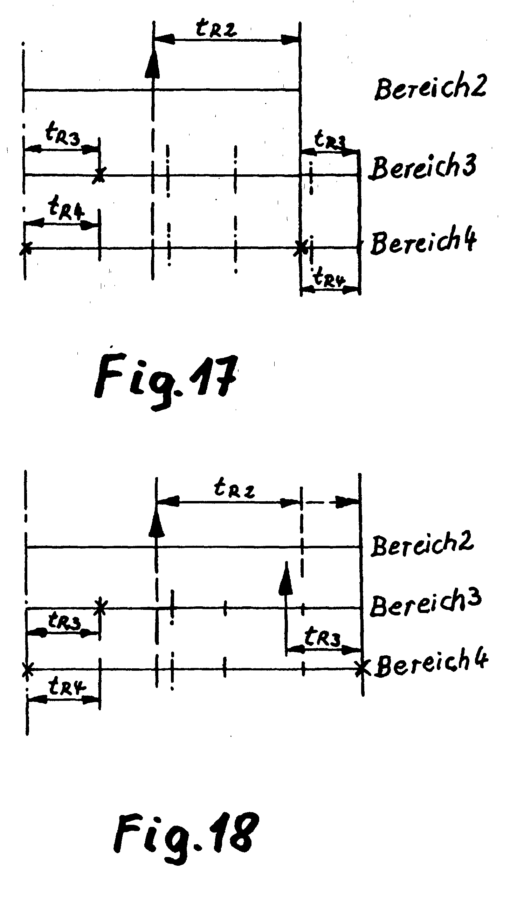

Die Fig. 2 zeigt die Anordnung im Display. In den Bereichen 3 und 4 sind die Symbole, beispielsweise nach Fig. 1 aufzeigbar und, falls mehr als zwei Symbolzeilen durch events mit Symbolen belegt sind, die Zeilen im zeitlichen Abstand (Rollieren) aufzeigbar, wobei immer nur eine Symbolzeile im Rollierabstand gewechselt wird, wenn kein event vorliegt. Der Bereich 2 ist eine weitere Zeile, in der ein Symbol und ein Hinweis oder/und eine Handlungsempfehlung in schriftlicher Form aufzeigbar ist. In dem dafür zuständigen Rechner, der auch für die Bereiche 3 und 4 zuständig sein kann, Anzeigesteuerung genannt, ist für den Bereich 2 eine Vielzahl von Symbolen mit zugeordneten Hinweisen und/oder Handlungsempfehlungen gespeichert, die, wenn ein event vorliegt, das entsprechende Symbol mit Hinweis sofort aufzeigt. Wenn mehr als ein event vorliegt, werden die entsprechenden Symbole mit Hinweis und/oder Handlungsempfehlung ebenfalls im Rollieren aufgezeigt.
Die Rollierzeit der Symbolzeilen in den Bereichen 3 und 4 ist vorzugsweise kürzer, als die der Zeile mit Symbol und Hinweis/Handlungsempfehlung im Bereich 2, da beispielsweise die Schriftform vom Fahrzeugführer aufnehmbar sein muss. Die Abstimmung der Zeiten zueinander beim Rollieren ist in den Figuren 17 und 18 dargestellt und im Text beschrieben.

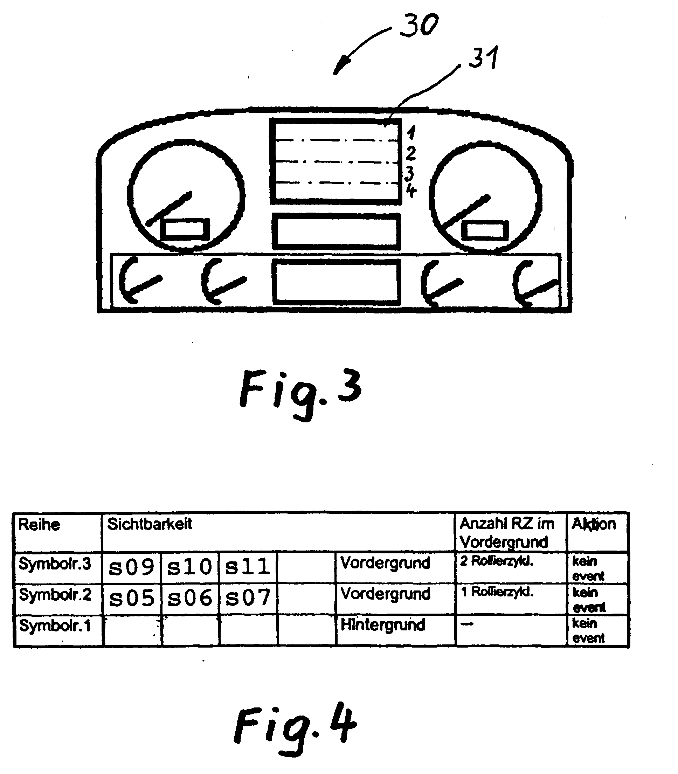

Die Fig. 3 zeigt die Anordnung des Displays 31 im Armaturenbrett 30. Das Display 31 hat die Bereiche 1, 2, 3, 4 und ist zentral im Sichtbereich des Fahrers im Armaturenbrett angeordnet.

Die Fig. 4 zeigt die aufgezeigten Symbolzeilen 3 und 2 in den Bereichen 3 und 4. Ein neu hinzukommendes Symbol wird zuerst in Symbolzeile 3, weil diese am längsten unverändert ist, eingetragen (Anspruch 2). Ein weiteres Symbol ist anschließend in der Symbolzeile 2 eintragbar. Die Anreihung kann solange erfolgen, bis die Zeile aufgefüllt ist. Die Zählung der Rollierzeit beginnt von neuem, wenn ein Symbol neu erscheint oder gelöscht wird.

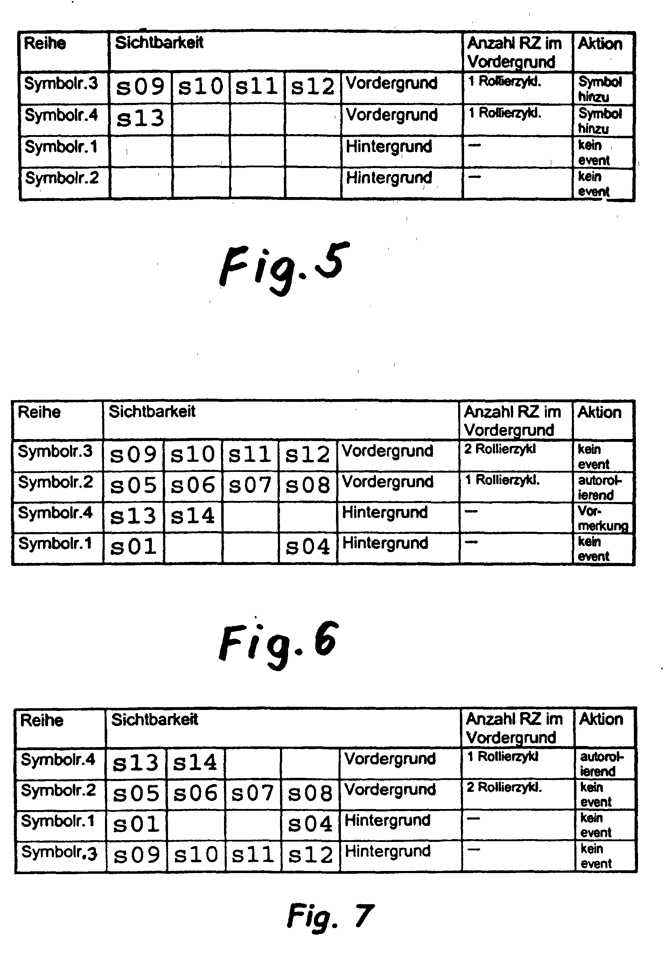

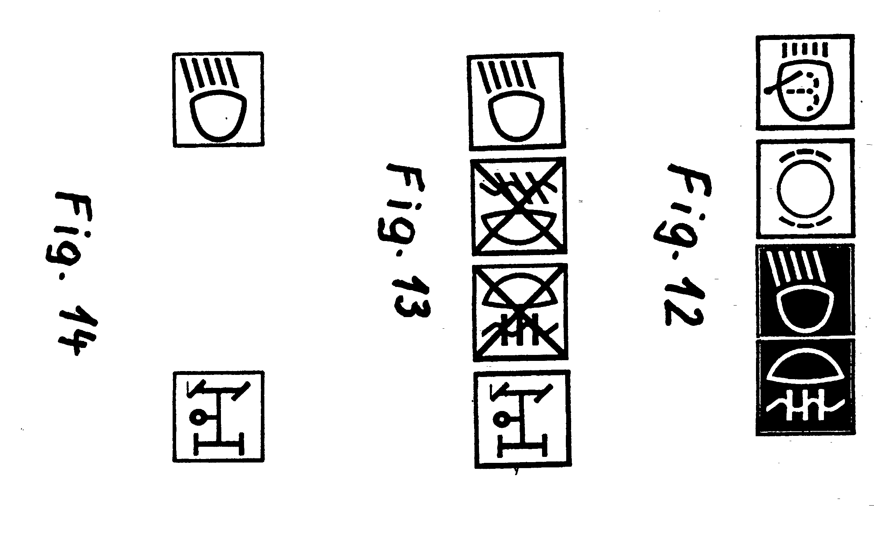

Die Fig. 5 zeigt eine weitere Anreihung eines Symbols. Wenn die aufgezeigte Symbolzeile 3 mit Symbolen, im Beispiel vier Symbole pro Zeile, belegt ist, sind in die Symbolzeile 4 weitere Symbole eintragbar und zwar noch links beginnend (Anspruch 3). Zur Kenntlichmachung der Eintragung erscheint die Eintragung z. B. farbinvers, Beschreibung Fig. 12.

Die Fig. 6 zeigt eine Vormerkung in der Symbolzeile 4 mit den Symbolen s13 und s14. Die Zeile wird sofort sichtbar in den Vordergrund, Fig. 7, gerückt (Anspruch 4).

Der Vergleich von Fig. 6 und Fig. 7 zeigt zusätzlich noch, dass die Symbolzeile 3, Fig. 6, in den Hintergrund gerückt ist, Fig. 7, und dass die Symbolzeile 4, in der die Symbole s13 und s14 vorgemerkt wurden, Fig. 6, sichtbar in den Vordergrund in die Symbolzeile gesetzt wurde, die am längsten stabil war, Zeile im Bereich 3 (Ansprüche 4 und 5).

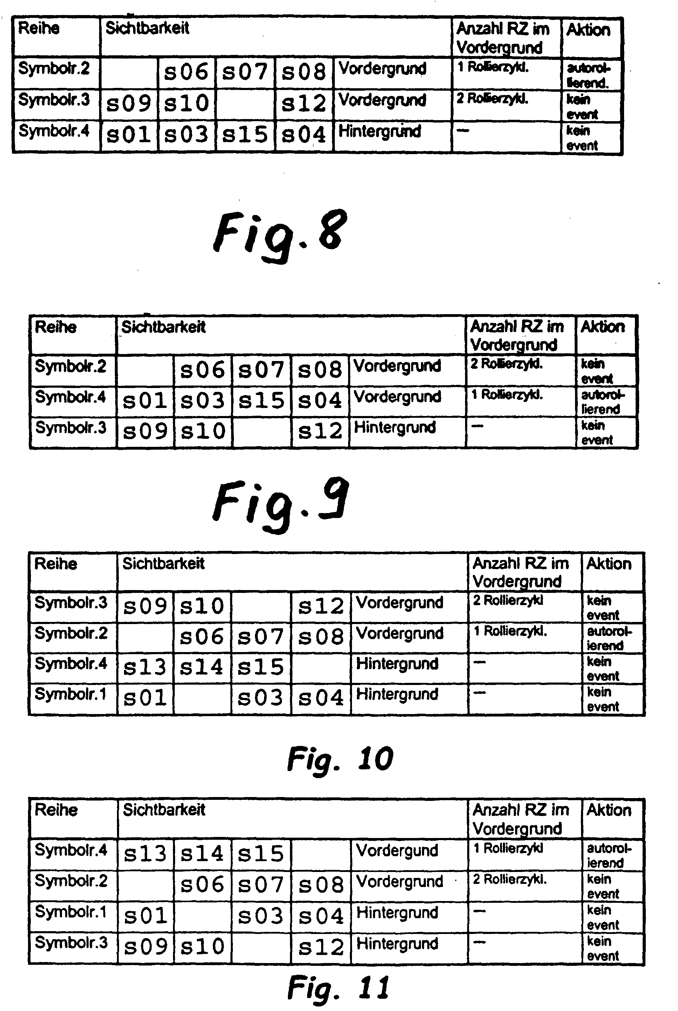

Die Fig. 8 und Fig. 9 zeigen, dass beim Autorollieren (= selbstständiges Rollieren in einer Rollierzeit ohne event) diejenige Symbolzeile im Vordergrund gegen die im Hintergrund wartende Symbolzeile ausgetauscht wird, die am längsten aufgezeigt ist (Anspruch 6). In diesem Beispiel rückt Symbolzeile 3 in den Hintergrund und Symbolzeile 4 wird aufgezeigt, Bereich 4.

Die Fig. 10 und Fig. 11 zeigen das Autorollieren, wenn alle Symbolzeilen belegt sind. Es wird immer nur eine sichtbare Symbolzeile in einer Rollierzeit gegen die nächste im Hintergrund wartende Symbolzeile ausgetauscht und aufgezeigt (Anspruch 7).

Im Beispiel: Symbolzeile 3 rückt in den Hintergrund und Symbolzeile 4 aus dem Hintergrund in den Vordergrund, wo Symbolzeile 3 war (Bereich 3).

Die Fig. 12 zeigt die aufgezeigte Zeile , in der die als event "Abblendlicht" und "Nebelschlussleuchte(n) eingeschaltet" und eingetragen wurde (Anspruch 9).
Die neu aufgezeigten Symbole erscheinen farbinvers, also die Symbole selbst hell für eine Aufblendmarkierungszeit, die gleich oder kleiner der Rollierzeit für diesen Bereich ist. Nach Ablauf dieser Markierungszeit erscheinen diese Symbole in Normalfarbgebung. Zur Kenntlichmachung eines neu aufgezeigten Symbols kann das Bild (Symbol und Untergrund) auch in einer anderen, als der standardmäßigen Farbgebung oder/und der Bilduntergrund in einem veränderten Muster dargestellt sein.

Die Fig. 13 zeigt eine aufgezeigte Symbolzeile, in der zwei Symbole, die Nebelscheinwerfer und die Nebelschlussleuchte(n) aus der Anzeige entfernt werden müssen, weil die genannten Beleuchtungskörper abgeschaltet wurden (Anspruch 10). Die Symbole werden beispielsweise durchgestrichen, bleiben aber noch eine Markierungszeit sichtbar im Display. Wenn die Zeilen rollieren, beginnt die Zeitzählung für das Rollieren im Moment des Durchstreichens von neuem. Wenn nur eine Zeile, also die aufgezeigte Zeile mit Symbolen belegt ist und kein Rollieren erfolgt, bleiben die durchgestrichenen Symbole eine Markierungszeit noch aufgezeigt. Die Markierungszeit ist gleich oder kann auch kleiner als die Rollierzeit sein.

Die Fig. 14 zeigt, wie sich die aufgezeigte Zeile, Fig. 13, nach einem Rollierzyklus, wenn diese Zeile wieder erscheint, oder nach einer Rollierzeit, wenn nur eine Zeile aufgezeigt ist, erscheint. An der (den) Stellen, an der (denen) gelöscht wurde, erscheint bzw. erscheinen eine bzw. mehrere Lücken (Anspruch 11). Wenn kein event vorliegt und die Zeile nicht mit einer anderen Zeile gefüllt bzw. aufgefüllt wird, wird nach Ablauf der Rollierzeit das Symbol bzw. die Symbole linksbündig aufgeschlossen (ist nicht dargestellt, Anspruch 12).

### Zusammenfassen von Symbolzeilen

Die Ansprüche 13 und 14 betreffen zwei Möglichkeiten der Zusammenfassung, wobei die beiden Möglichkeiten entweder in einer Software implimentiert sein können, oder jeweils nur eine der Möglichkeiten in einer Software implimentiert sein kann.

Nach Anspruch 13 geht die Vormerkung einer Zusammenfassung von der nächsten im Hintergrund wartenden Zeile aus, das heißt, für die nächste Rollierung wird bereits (in Software) die zusammengefasste Zeile vorgemerkt und beim Aufzeigen die zusammengefasste Zeile aufgezeigt. Die Voraussetzungen für das Zusammenfassen sind:
- die Zeile mit mehr Symbolen wird mit der Zeile mit weniger Symbolen gefüllt (Anspruch 17),
- wenn die zusammenfassbaren Zeilen die gleiche Anzahl von Symbolen haben, wird diejenige Zeile aufgefüllt, die als zeitlich nächste Zeile zum Aufzeigen eingeordnet ist (Anspruch 17), (die Zeile also, die im Hintergrund wartet),
- die "Lücken" in der Zeile müssen mindestens eine Rollierzeit aufgezeigt gewesen sein (Anspruch 16),
- das Auffüllen bzw. Aneinanderreihen geschieht "spaltenorientiert", das heißt, jedem Symbol soll möglichst die Spalte zugewiesen , die ihr von Anfang an zugewiesen ist,
- in der Zeile, die aufgefüllt wird, soll möglichst wenig verändert werden.

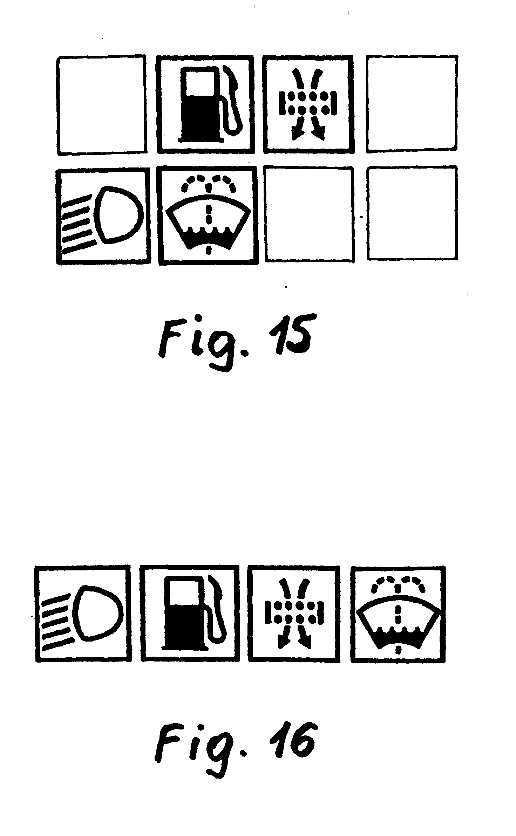

Wenn nach Anspruch 13 zusammengefasst wird und das Bild nach Fig. 15 aufgezeigt ist, wobei die untere Zeile von Fig. 15 die im Hintergrund wartende Zeile sein müsste (und nicht sichtbar ist), wird beim nächsten Rollieren die Zeile nach Fig. 16, also die bereits zusammengefasste Zeile aufgezeigt.
Der Vorteil dieser Methode ist, dass bei mehreren programmierten Symbolzeilen (Vordergrund und Hintergrund) eine bessere Zusammenfassungsmöglichkeit gegeben ist, was aber auch mehr Speicherkapazität in der Anzeigesteuerung erfordert.

Nach Anspruch 14 werden vorzugsweise die aufgezeigten Zeilen zusammengefasst. Wenn die Voraussetzungen
- die Zeile mit mehr Symbolen wird mit der Zeile mit weniger Symbolen gefüllt,
- wenn die zusammenfassbaren Zeilen die gleiche Anzahl von Symbolen haben, wird diejenige Zeile aufgefüllt, die am längsten unverändert ist,
- die Lücken" waren mindestens eine Rollierzeit aufgezeigt
- es wird zuerst ein Zusammenfassen versucht, bevor linksbündig aufgeschlossen wird,
erfüllt sind, kann zusammengefasst werden.

Die Zusammenfassung erfolgt dann
- spaltenorientiert, das heißt, Symbole sollen möglichst in die Spalte eingeordnet werden, in die sie ursprünglich eingeordnet wurden,
- an der aufzufüllenden Zeile soll möglichst wenig verändert werden.

Das Symbol s01 "Scheinwerfer eingeschaltet" wird in Spalte 1 des Bereiches 3 eingeordnet, weil dieses Symbol der Spalte 1, wie aus Fig. 1 ersichtlich, zugeordnet ist. Die Symbole "Tanken erforderlich", (s12) und "Luftfilter zu großer Unterdruck" (s13)" bleiben an ihren Stellen, weil sie in diese Spalten eingeordnet sind, Fig. 1.
Das Symbol (s06) "wenig Flüssigkeit in der Scheibenwaschanlage" wird angereiht, weil die ihm zugeteilte Spalte, Fig. 1, belegt ist und an der aufzufüllenden Zeile möglichst wenig verändert werden soll.

Der Wechselvorgang ist im Display 31 sichtbar.

Die Fig. 17 zeigt die zeitliche Abstimmung der Symbolzeilen in den Bereichen 3 und 4, wenn in der Symbolzeile mit Hinweis/Handlungsempfehlung ein event auftritt (Anspruch 20). Der event ist mit einem senkrechten Pfeil dargestellt.
Der Eintritt eines events im Bereich 2 triggert die Aufzeigezeiten der Symbolzeilen, Bereiche 3 und 4 neu, und das Rollieren in den Bereichen 3 und 4 wird so lange ausgesetzt, bis die Rollierzeit t_{R2} abgelaufen ist. Das heißt, die Symbolzeilen, Bereiche 3 und 4 ändern sich während der Rollierzeit t_{R2}, die ab dem Beginn des events im Bereich 2 gezählt wird, nicht.

Nach Ablauf der Rollierzeit t_{R2} erfolgt der Wechsel der Zeilen in den Bereichen 2 und 4 gemeinsam. Nach Ablauf der Rollierzeit t_{R2} beginnen die Rollierzeiten t_{R3} und t_{R4} wieder unabhängig von t_{R2} ihren Zeitlauf.

Die Fig. 17 zeigt den Fall, dass die Zeilen in den Bereichen 3 und 4 autorollierend sind. Autorollierend meint in diesem Zusammenhang, dass sowohl im Bereich 3 wie im Bereich 4 eine aufgezeigte Zeile und eine im Hintergrund zum Aufzeigen wartende Zeile vorhanden und nicht durch events gestört ist.

Beim Autorollieren beider Symbolzeilen, Bereiche 3 und 4 rolliert abwechslungsweise immer nur eine Symbolzeile, was in der Zeichnung mit einem "x", Beginn der Rollierzeit für die neue Zeile, angegeben ist.

Durch diese gegenseitige Abstimmung wird ein ruhiger Gesamteindruck der Anzeige im Display erreicht.

Die Fig. 18 zeigt die zeitliche Abstimmung der Symbolzeile mit Hinweis/Handlungsempfehlung, Bereich 2, wenn im Bereich 3 (oder 4) ein event eintritt. In der Zeichnung ist der event im Bereich 3, senkrechter Pfeil, dargestellt.

Weiterhin sollen die Symbolzeilen, Bereiche 3 und 4 autorollierend sein. Der event tritt vor Ablauf der Rollierzeit t_{R2} ein. Beim event im Bereich 3 bleibt der event, die Rollierzeit t_{R3} aufgezeigt, dadurch verlängert sich die Rollierzeit t_{R2} soweit, bis die Rollierzeit t_{R3}, vom Beginn des events an gezählt, abgelaufen ist.

Ein Rollieren im Bereich t_{R2} findet nicht statt, obwohl die Rollierzeit t_{R2} in dieser Zeit abläuft. Es findet der Wechsel der Zeilen in den Bereichen 2 und 4 gemeinsam statt, weil die letzte autorollierend aufgezeigte Symbolzeile im Bereich 3 war.. Der eingezeichnete event im Bereich 2 (zeitlich vorher) hat die Symbolzeilen in den Bereichen 3 und 4 neu getriggert und durch diesen event die Symbolzeilen in den Bereichen 3 und 4 nicht mehr rollieren lassen, deshalb war im Bereich 3 die letzte Änderung durch Autorollieren. Dadurch, dass abwechselnd immer nur eine Zeile beim Autorollieren gewechselt wird, ist nach den events (Bereiche 2 und 3) die Symbolzeile im Bereich 4 zum Wechsel anstehend (Markierung "x"). Im Bereich 3 bleibt die Symbolzeile mit dem event eine weitere Rollierzeit t_{R3} unverändert aufgezeigt. Auch mit dieser Abstimmung wird ein ruhiger Gesamteindruck der Anzeige im Display erreicht.

Die Markierung "x" in der Zeichnung bedeutet, dass infolge von Autorollieren der Beginn der Rollierzeit für die neue Zeile erfolgt, wie in Fig. 17 beschrieben.

## Patentansprüche

1. Verfahren zum Anzeigen von Ereignissen in einem Kraftfahrzeug mittels Symbolen in einem abgegrenzten Platz eines Displays mit größerer Anzahl der möglichen Symbole als die vorhandenen Stellen im abgegrenzten Platz des Displays, bei dem in zwei ersten Zeilen eine sichtbare Anzeige von Symbolen vorgesehen wird und im Hintergrund, in einem Rechner und im abgegrenzten Platz im Display nicht sichtbar zwei oder mehr erste Zeilen von Symbolen in Warteposition bringbar sind, die in einem zeitlichen Abstand voneinander innerhalb einer Rollierzeit in den ersten Zeilen automatisch aufzeigbar sind und in einer dritten Zeile ein Symbol und ein Hinweis in Schriftform automatisch aufgezeigt werden, wobei eine Vielzahl von Symbolen und den dazugehörigen Hinweisen vorgesehen und ebenfalls im Hintergrund gespeichert werden und im Falle von einem Ereignis oder mehreren Ereignissen ein Symbol mit einem Hinweis sofort aufgezeigt wird und in einer Rollierzeit jeweils ein weiteres Symbol mit Hinweis in Schriftform aufgezeigt wird und wobei die Aufzeigezeiten der zwei ersten Zeilen unter sich und der beiden ersten Zeilen mit der dritten Zeile aufeinander abgestimmt sind.

2. Verfahren nach Anspruch 1,
**dadurch gekennzeichnet, dass**, wenn die beiden ersten Zeilen in ihren Stellen nicht voll mit aufgezeigten Symbolen belegt sind, ein neu hinzukommendes Symbol oder mehrere neu hinzukommende Symbole in der Zeile angereiht wird oder werden, die am längsten unverändert ist.

3. Verfahren nach den Ansprüchen 1 und 2,
**dadurch gekennzeichnet, dass**, wenn die eine erste Zeile aufgefüllt und in der anderen ersten Zeile noch Platz ist, ein neu hinzukommendes Symbol oder mehrere Symbole in dieser Zeile von links beginnend eingetragen wird oder werden.

4. Verfahren nach einem der vorhergehenden Ansprüche,
**dadurch gekennzeichnet, dass**, wenn die ersten Zeilen mit aufgezeigten Symbolen belegt sind und ein Ereignis vorliegt, die nächstwartende Zeile im Hintergrund, in der ein Symbol(e) eintragbar ist (sind), sichtbar in den Vordergrund in einer den beiden ersten Zeilen gerückt wird (werden).

5. Verfahren nach Anspruch 4,
**dadurch gekennzeichnet, dass** diejenige erste Zeile, die am längsten stabil, also ohne Ereignis, aufgezeigt ist, gegen die im Hintergrund wartende Zeile, in die ein Symbol zum Eintragen ansteht, ausgetauscht wird.

6. Verfahren nach einem der vorhergehenden Ansprüche,
**dadurch gekennzeichnet, dass** beim automatischen Aufzeigen die Zeile, die für den nächsten Wechsel ansteht, diejenige ist, die am längsten aufgezeigt ist.

7. Verfahren nach Anspruch 6,
**dadurch gekennzeichnet, dass**, wenn alle vier erste Zeilen mit Symbolen belegt sind, immer nur eine Zeile und zwar die nächste im Hintergrund wartende Zeile automatisch aufgezeigt wird.

8. Verfahren nach einem der vorhergehenden Ansprüche,
**dadurch gekennzeichnet, dass** die Zählung der Rollierzeit in jeder der ersten Zeilen von neuem beginnt, wenn ein Symbol in einer der genannten Zeilen neu erscheint oder gelöscht wird.

9. Verfahren nach einem der vorhergehenden Ansprüche,
**dadurch gekennzeichnet, dass** bei der Einblendung eines Symbols das Symbol zunächst farbinvers oder der Bilduntergrund oder/und das Symbol in einer anderen Farbe als der standardmäßigen Farbgebung erscheint, oder/und das Symbol oder/und der Bildhintergrund mit einem veränderten Muster dargestellt wird.

10. Verfahren nach einem der vorhergehenden Ansprüche,
**dadurch gekennzeichnet, dass**, wenn ein Symbol gelöscht wird, eine Löschungsmarkierung an diesem Symbol aufgezeigt wird.

11. Verfahren nach einem der vorhergehenden Ansprüche,
**dadurch gekennzeichnet, dass** bei der Rollierung die erste Zeile, in der ein Symbol oder mehrere gelöscht wurden, zunächst ohne die gelöschten Symbole mit je einem Freiplatz an der Stelle, an der gelöscht wurde, erscheint.

12. Verfahren nach einem der vorhergehenden Ansprüche,
**dadurch gekennzeichnet, dass**, wenn nur eine erste Zeile aufgezeigt wird, kein Ereignis vorliegt und im Hintergrund keine erste Zeile mit einer Eintragung vorhanden ist, in der aufgezeigten ersten Zeile nach Ablauf der Rollierzeit die Symbole linksbündig aufgeschlossen werden.

13. Verfahren nach einem der vorhergehenden Ansprüche,
**dadurch gekennzeichnet, dass**, wenn die Symbolanzahl von einer oder mehreren anderen ersten Zeilen, bei denen die Symbolanzahl maximal die einer einzelnen Zeile ist, die Symbole der Zeilen zusammengefasst werden, wobei von der nächsten im Hintergrund wartenden Zeile die Vormerkung einer Zusammenfassung ausgeht.

14. Verfahren nach einem der vorhergehenden Ansprüche,
**dadurch gekennzeichnet, dass** die aufgezeigten ersten Zeilen zusammengefasst werden, ohne dass die Vormerkung der Zusammenfassung von einer im Hintergrund wartenden Zeile ausgeht.

15. Verfahren nach einem der Ansprüche 1 bis 14,
**dadurch gekennzeichnet, dass** nach dem Löschen von Symbolen und nach dem Aufzeigen der Lücken, in denen gelöscht wurde, linksbündig aufgeschlossen wird.

16. Verfahren nach Anspruch 15,
**dadurch gekennzeichnet, dass** die Lücken erst dann benutzt werden, wenn diese mindestens eine Rollierzeit aufgezeigt waren.

17. Verfahren nach Anspruch 13 oder 14,
**dadurch gekennzeichnet, dass** die Zeile mit mehr Symbolen mit der Zeile gefüllt wird, die weniger Symbole eingetragen hat, und im Falle, dass beide Zeilen jeweils die gleiche Anzahl von Symbolen haben, die Zeile aufgefüllt wird, die als zeitlich nächste Zeile zum Aufzeigen eingeordnet ist.

18. Verfahren nach den Ansprüchen 11 bis 17,
**dadurch gekennzeichnet, dass** beim Zusammenfassen das Auffüllen stellenorientiert ist, wobei die dem jeweiligen Symbol zugeordnete Stelle innerhalb einer Zeile auch in der anderen Zeile zugewiesen wird.

19. Verfahren nach einem der vorhergehenden Ansprüche,
**dadurch gekennzeichnet, dass**, wenn in den ersten Zeilen nur eine Zeile belegt ist und in der dritten Zeile mehrere Ereignisse vorliegen, die aufgezeigte erste Zeile aufgezeigt bleibt, während das Rollieren der Anzeige in der dritten Zeile fortgesetzt wird und umgekehrt.

20. Verfahren nach Anspruch 1,
**dadurch gekennzeichnet, dass** die Rollierzeit der dritten Zeile mit Symbol und Hinweis länger ist als die Rollierzeit der ersten Zeilen.

21. Verfahren nach Anspruch 1,
**dadurch gekennzeichnet, dass**, wenn in der dritten Zeile ein Symbol mit Hinweis durch ein Ereignis erfolgt und die Rollierzeit in der dritten Zeile noch nicht beendet ist, die Aufzeigedauer der ersten Zeile soweit verändert wird, bis die Rollierzeit in der dritten Zeile abgelaufen ist und dann gleichzeitig der Wechsel in den beiden ersten Zeilen und in der dritten Zeile erfolgt.

22. Verfahren nach Anspruch 1,
**dadurch gekennzeichnet, dass**, wenn in den beiden ersten Zeilen die Aufzeigedauer der Zeile durch ein Ereignis oder mehrere Ereignisse verändert wird, die Aufzeigedauer der dritten Zeile mit Symbol und Hinweis soweit verändert wird, bis nach dem letzten Ereignis in einer der beiden ersten Zeilen deren Rollierzeit abgelaufen ist und dann gleichzeitig der Wechsel in den Zeilen erfolgt.

23. Verfahren nach einem der vorhergehenden Ansprüche,
**dadurch gekennzeichnet, dass**, wenn nur eine der ersten Zeilen belegt ist und aufgezeigt wird und in der dritten Zeile nur ein Symbol mit Hinweis in Schriftform aufgezeigt wird, die genannten Zeilen unverändert aufgezeigt bleiben.

24. Verfahren nach Anspruch 1,
**dadurch gekennzeichnet, dass** drei oder mehr Zeilen im Display sichtbar aufgezeigt werden.

## Claims

1. Procedure for indicating occurrences in a motor vehicle by means of symbols in a defined area of a display with a number of possible symbols which is larger than the number of positions provided in the defined area of the display in which a visual indication of symbols is provided in two first lines and two or more non-visible first lines of symbols can be brought into a waiting position in the background, in a computer and in the defined area of the display and can be automatically indicated in the first lines at a certain interval relative to one another within a rolling period and a symbol and a note in letters are automatically indicated in a third line, whereby a variety of symbols and the associated notes are provided and also stored in the background and in the event of one or several occurrences a symbol with a note will be immediately indicated and one further symbol with a note in letters will be indicated within a rolling period and whereby the indicating times of the two first lines are adapted to each other and those of the two first lines and that of the third line are adapted to each other.

2. Procedure according to Claim 1, **characterised in that** if the first two lines are not completely occupied by indicated symbols one or several new symbols will be added to that line which has longest remained unchanged.

3. Procedure according to the Claims 1 and 2, **characterised in that** if the one first line is fully occupied and in the other first line positions are still available, a new symbol or several symbols will be added to this line, the adding of symbols starting from the left

4. Procedure according to one of the foregoing Claims, **characterised in that** if the first lines are occupied with indicated symbols and an occurrence is present, the next line which waits in the background and in which (a) symbol(s) can be entered will be visibly moved into the foreground in one of the two first lines.

5. Procedure according to Claim 4, **characterised in that** the line which is longest stable, ie which is indicated without occurrence, is exchanged for the line which waits in the background and in which a symbol is to be entered.

6. Procedure according to one of the foregoing Claims, **characterised in that** for automatic indication the line due for the next change is that line which has been indicated longest.

7. Procedure according to Claim 6, **characterised in that** if all four first lines are occupied with symbols only one line is indicated at a time, namely the line next waiting in the background.

8. Procedure according to one of the foregoing Claims, **characterised in that** the counting of the rolling time in each of the first lines will start anew if a symbol newly appears in one of the mentioned lines or is deleted.

9. Procedure according to one of the foregoing Claims, **characterised in that** if a symbol is inserted it will first appear inverse-coloured or the background of the display and/or the symbol will appear in a colour different from the standard colour and/or the symbol or/and the background of the display will be shown with a different pattern.

10. Procedure according to one of the foregoing Claims, **characterised in that** if a symbol is deleted a deletion mark will be indicated at this symbol.

11. Procedure according to one of the foregoing Claims, **characterised in that** during the rolling the first line in which one or several symbols were deleted first appears without the deleted symbols but with a free position where each deletion was carried out.

12. Procedure according to one of the foregoing Claims, **characterised in that** if only one first line is indicated, no occurrence is present and, in the background, there is no first line with an entry, the symbols in the first line indicated will be left-justified after the rolling time has elapsed.

13. Procedure according to one of the foregoing Claims, **characterised in that** if the number of symbols of one or several other first lines in which the number of symbols is at most that of a single line, the symbols of the lines will be combined, the next line waiting in the background effecting the notification of a combination.

14. Procedure according to one of the foregoing Claims, **characterised in that** the indicated first lines are combined without the notification of the combination being effected by a line waiting in the background.

15. Procedure according to one of the Claims 1 to 14, **characterised in that** after the deleting of symbols and the indicating of the gaps in which a deletion was carried out the remaining symbols move to the left to close the gaps.

16. Procedure according to Claim 15, **characterised in that** gaps will be used only if they have been indicated for the duration of at least one rolling period.

17. Procedure according to Claim 13 or 14, **characterised in that** the line with more symbols is filled with symbols from the line in which fewer symbols are entered and that if both lines have the same number of symbols that line will be filled which is arranged as the next in time to be indicated.

18. Procedure according to the Claims 11 to 17, **characterised in that**, during combining, the filling operation is position-oriented, whereby the position allocated to the respective symbol within one line is also allocated to said symbol in the other line.

19. Procedure according to one of the foregoing Claims, **characterised in that** if in the first lines only one line is occupied and there are several occurrences in the third line the indicated first line will remain indicated while the rolling of the display in the third line will be continued and vice versa.

20. Procedure according to Claim 1, **characterised in that** the rolling time for the third line with symbol and note is longer than the rolling time for the first lines.

21. Procedure according to Claim 1, **characterised in that** if in the third line a symbol with note appears because of an occurrence and the rolling time in the third line has not yet elapsed, the indicating period for the third line will be changed until the rolling time in the third line has elapsed and the change in the two first lines and in the third line will then be made simultaneously.

22. Procedure according to Claim 1, **characterised in that** if in the two first lines the indicating period for the line is changed because of one or several occurrences the indicating period for the third line with symbol and note will be changed until the rolling time in one of the first two lines has elapsed after the last occurrence and the change will then be made in the lines simultaneously.

23. Procedure according to one of the foregoing Claims, **characterised in that** if only one of the first lines is occupied and indicated and in the third line only one symbol with a note in letters is indicated, said lines will remain indicated unchanged.

24. Procedure according to Claim 1, **characterised in that** three or more lines in the display are indicated visibly.

## Revendications

1. Procédé pour afficher des événements dans un véhicule à moteur au moyen de symboles sur une surface délimitée d'un écran d'affichage avec un nombre plus important de symboles possibles que les emplacements existants sur une surface délimitée de l'écran d'affichage, sur lequel un affichage visible de symboles est prévu sur les deux premières lignes et, en arrière-plan, deux ou plusieurs premières lignes de symboles sont mises en état d'attente dans un ordinateur et de manière invisible sur la surface délimitée de l'écran, ces symboles étant affichables automatiquement sur les premières lignes dans un espace temporel les uns par rapport aux autres selon un temps de roulement et, sur une troisième ligne, un symbole et une indication en lettre sont affichés automatiquement, auquel cas un grand nombre de symboles et leur indication sont prévus et mémorisés également en arrière-plan et, en cas d'un ou de plusieurs événements, un symbole avec une indication est immédiatement affiché et, dans un temps de roulement, un autre symbole à chaque fois avec une indication est affiché en lettre et auquel cas les temps d'affichage des deux premières lignes entre eux et des deux premières lignes avec la troisième ligne sont adaptés les uns par rapport aux autres.

2. Procédé selon la revendication 1, **caractérisé par le fait que**, lorsque les deux premières lignes ne sont pas intégralement occupées de symboles affichés à leur emplacement, un ou plusieurs nouveaux symboles est/sont ajouté(s) sur la ligne qui reste inchangée le plus longtemps.

3. Procédé selon les revendications 1 et 2, **caractérisé par le fait que**, lorsque la première ligne est remplie et qu'il reste de la place sur les autres premières lignes, un ou plusieurs nouveaux symboles peut/peuvent s'inscrire sur cette ligne en partant de la gauche.

4. Procédé selon une des revendications mentionnées précédemment, **caractérisé par le fait que**, lorsque les premières lignes sont occupées par des symboles affichés et qu'un événement survient, la ligne suivante en arrière-plan sur laquelle un ou plusieurs symboles peut/peuvent s'inscrire est mise au premier plan sur les deux premières lignes

5. Procédé selon la revendication 4, **caractérisé par le fait que** la première ligne qui est affichée de manière stable le plus longtemps, c'est-à-dire sans événement, est remplacée par la ligne en attente en arrière-plan sur laquelle un symbole attend pour s'inscrire.

6. Procédé selon une des revendications mentionnées précédemment, **caractérisé par le fait que**, du fait de l'affichage automatique, la ligne qui attend le changement suivant est celle qui est affichée le plus longtemps.

7. Procédé selon la revendication 6, **caractérisé par le fait que**, lorsque les quatre premières lignes sont toutes occupées par des symboles, seule une ligne et, plus précisément, la ligne suivante en attente en arrière-plan est toujours affichée automatiquement.

8. Procédé selon une des revendications mentionnées précédemment, **caractérisé par le fait que** le comptage du temps de roulement sur chacune des premières lignes repart à zéro lorsqu'un symbole réapparaît ou disparaît sur l'une des lignes mentionnées.

9. Procédé selon une des revendications mentionnées précédemment, **caractérisé par le fait que**, lors de l'affichage d'un symbole, le symbole apparaît tout d'abord dans la couleur inverse ou l'arrière-plan du symbole et/ou le symbole apparaissent dans une couleur différente du ton standard, et/ou le symbole et/ou l'arrière-plan du symbole sont représentés avec un motif modifié.

10. Procédé selon une des revendications mentionnées précédemment, **caractérisé par le fait que**, lorsqu'un symbole est effacé, une marque d'effacement s'affiche sur le symbole.

11. Procédé selon une des revendications mentionnées précédemment, **caractérisé par le fait que**, lors du roulement, la première ligne sur laquelle un ou plusieurs symboles ont été effacés apparaît tout d'abord sans les symboles effacés à chaque fois avec un emplacement libre là où le symbole a été effacé.

12. Procédé selon une des revendications mentionnées précédemment, **caractérisé par le fait que**, lorsque seule une première ligne est affichée, qu'aucun événement ne survient et qu'en arrière-plan, aucune première ligne avec une indication n'existe, les symboles sont regroupés de manière alignée à gauche sur la première ligne affichée après l'écoulement du temps de roulement

13. Procédé selon une des revendications mentionnées précédemment, **caractérisé par le fait que**, lorsque le nombre de symboles d'une ou de plusieurs autres premières lignes correspond au maximum à celui d'une seule ligne, les symboles des lignes seront regroupés, auquel cas la notification d'un regroupement se termine à partir de la ligne suivante mise en attente en arrière-plan.

14. Procédé selon une des revendications mentionnées précédemment, **caractérisé par le fait que** les premières lignes affichées sont regroupées sans que la notification du regroupement d'une ligne en attente en arrière-plan se termine.

15. Procédé selon une des revendications 1 à 14, **caractérisé par le fait qu'**après l'effacement des symboles et après l'affichage des emplacements vides où les symboles ont été effacés, tous les symboles sont regroupés de manière alignée à gauche.

16. Procédé selon la revendication 15, **caractérisé par le fait que** les emplacements vides sur les lignes sont utilisés seulement lorsque celles-ci étaient affichées au minimum pendant un temps de roulement.

17. Procédé selon la revendication 13 ou 14, **caractérisé par le fait que** la ligne avec davantage de symboles est remplie par la ligne qui a affiché moins de symboles et dans le cas où les deux lignes possèdent chacune le même nombre de symboles, c'est la ligne qui est positionnée temporellement comme ligne suivante à afficher qui est remplie.

18. Procédé selon les revendications 11 à 17, **caractérisé par le fait que**, lors du regroupement, le remplissage est orienté selon l'emplacement, auquel cas l'emplacement attribué à chaque symbole au sein d'une ligne est également attribué sur une autre ligne.

19. Procédé selon une des revendications mentionnées précédemment, **caractérisé par le fait que**, lorsqu'une seule ligne est occupée parmi les premières lignes et que plusieurs événements sont existants sur la troisième ligne, la première ligne affichée reste affichée tandis que le roulement de l'affichage sur la troisième ligne continue et inversement.

20. Procédé selon la revendication 1, **caractérisé par le fait que** le temps de roulement de la troisième ligne avec symbole et indication est plus long que le temps de roulement des premières lignes.

21. Procédé selon la revendication 1, **caractérisé par le fait que**, lorsque, sur la troisième ligne, un symbole avec indication apparaît à la suite d'un événement et que le temps de roulement sur la troisième ligne n'est pas encore écoulé, la durée d'affichage de la première ligne sera modifiée jusqu'à ce que le temps de roulement sur la troisième ligne soit écoulé et qu'ensuite simultanément, le changement sur les deux premières et sur la troisième ligne ait lieu.

22. Procédé selon la revendication 1, **caractérisé par le fait que**, lorsque, sur les deux premières lignes, la durée d'affichage de la ligne est modifiée par un ou plusieurs événements, la durée d'affichage de la troisième ligne avec symbole et indication est modifiée jusqu'à ce qu'après le dernier événement sur l'une des deux premières lignes, leur temps de roulement se soit écoulé et qu'ensuite simultanément, le changement sur les lignes ait lieu.

23. Procédé selon une des revendications mentionnées précédemment, **caractérisé par le fait que**, lorsqu'une seule des premières lignes est occupée et affichée et que, sur la troisième ligne, seul un symbole avec indication est affiché en lettre, les lignes mentionnées restent affichées de manière inchangée.

24. Procédé selon la revendication 1, **caractérisé par le fait que** trois ou plusieurs lignes sont affichées de manière visible sur l'écran d'affichage.
